Europäisches Patentamt

European Patent Office

Office européen des brevets

(11) Veröffentlichungsnummer: **0 233 593**
**B1**

(12) **EUROPÄISCHE PATENTSCHRIFT**

(45) Veröffentlichungstag der Patentschrift: **25.07.90**

(21) Anmeldenummer: **87101951.9**

(22) Anmeldetag: **12.02.87**

(51) Int. Cl.⁵: **F 16 N 7/36,** F 16 N 31/02,
F 16 C 33/66

(54) **Lagerung für Maschinenwellen.**

(30) Priorität: **20.02.86 DE 3605367**

(43) Veröffentlichungstag der Anmeldung:
**26.08.87 Patentblatt 87/35**

(45) Bekanntmachung des Hinweises auf die
Patenterteilung:
**25.07.90 Patentblatt 90/30**

(84) Benannte Vertragsstaaten:
**AT FR IT**

(56) Entgegenhaltungen:
EP-A- 77 291
DE-C- 617 253
DE-C- 813 425
FR-A- 515 036
FR-A- 1 529 735
US-A- 2 719 667
US-A- 3 318 644

(73) Patentinhaber: **KSB Aktiengesellschaft**
**Johann-Klein-Strasse 9**
**D-6710 Frankenthal (DE)**

(72) Erfinder: **Behr, Eckard**
**Stettiner Strasse 3**
**D-6711 Beindersheim (DE)**
Erfinder: **Gaffal, Karl**
**Am Wurmberg 13**
**D-6713 Freinsheim (DE)**
Erfinder: **Schill, Jürgen**
**Bachweg 10**
**D-6719 Weisenheim/Bg. (DE)**

**Beschreibung**

Die Erfindung betrifft eine Lagerung für Maschinen mit vertikaler Welle gemäß dem Oberbegriff des Hauptanspruches.

Aus der EP—A—0 077 291 ist ein sogenanntes selbstpumpendes Spurlager für elektrische Maschinen mit vertikaler Welle bekannt. Die Lagerelemente sind hier innerhalb eines stationären Gehäuses angeordnet, welches mit Öl gefüllt ist und sicherstellt, daß die Lagerelemente ständig innerhalb des Öles angeordnet sind. Eine in den rotierenden Teil der Lagerelemente angeordnete Pumpvorrichtung bewirkt eine Umwälzung des Öles, welches einem Ringkanal mit anschließendem Ölkühler zugeleitet wird. Die Abdichtung des Ölbehälters gegenüber der Welle erfolgt durch ein Standrohr, welches über den Ölspiegel hinausragt. Diese Anordnung erfordert ein sehr großes Bauvolumen und durch das im Bereich der Welle angeordnete Standrohr müssen größere Lagerelemente Verwendung finden, wodurch in vielen Anwendungsfällen eine überdimensionierte Lagerung die Folge ist. Da aber mit der Lagergröße auch die zulässige maximale Betriebsdrehzahl sinkt und die Lagerverlustleistung ansteigt, können sich Kühlungsprobleme ergeben. Da weiterhin die freie konvektive Wärmeableitung des Lagergehäuses ebenfalls gering ist, muß bei schnelldrehenden Maschinenwellen mit hohen Lagertemperaturen gerechnet werden.

Aus der DE—C—813 425 ist eine Lagerung für Maschinenwellen bekannt, bei der ungünstige Kühlbedingungen gegeben sind. Einerseits behindert ein Schutzmantel (8) die Wärmeabfuhr von dem rotierenden Ölbehälter (6) und andererseits können die unterhalb der Lager angeordneten Stauelemente nur unzureichend gekühltes Öl aufnehmen.

Die FR—PS 15 29 735 zeigt eine dem Oberbegriff entsprechende Lagerung für Maschinenwellen. Unterhalb der Lager befindet sich ein rotierender Ölbehälter, welcher mit halber Wellendrehzahl rotiert. Zwischen dem Lagerträger und dem rotierenden Ölbehälter sind Dichtungen angeordnet. An der Außenseite des Ölbehälters angebrachte Kühlflächen unterstützen die Wärmeabfuhr. An einem stationären Lagerträger angeordnete Stauelemente tauchen in den Ölbehälter ein und dienen zur Ölaufnahme. Da der Ölbehälter nur mit der halben Wellendrehzahl rotiert, sind die Öl-Förderleistungen dieses Systems sehr gering.

Der Erfindung liegt die Aufgabe zugrunde, für Maschinen mit vertikaler Welle eine mit Eigenschmierung versehene Lagerung zu entwickeln, die sowohl unmittelbar nach dem Anlauf als auch bei hohen Drehzahlen eine zuverlässige Schmierung gewährleistet.

Die Lösung dieser Aufgabe erfolgt gemäß dem kennzeichnenden Teil des Hauptanspruches. Bedingt durch den mit Wellendrehzahl rotierenden Ölbehälter erfolgt eine bessere Wärmeableitung, welche eine zuverlässige Kühlung zur Folge hat. Durch die Rotation des Ölbehälters wird das darin befindliche Öl nach außen gedrängt und es bildet sich im Inneren des Ölbehälters eine parabolische Öloberfläche aus. Aufgrund der unterschiedlichen Wichte von reinem Öl und einem mit Ölbläschen versetzten Öl befinden sich die schäumenden Bestandteile des Öles auf einem kleineren Radius als das reine flüssige Öl, welches nach außen sowie nach oben gedrückt wird. Mittels der Anordnung von einem oder mehreren Stauelementen oberhalb der Lagerelemente und in unmittelbarer Nähe der Wandfläche des Ölbehälters wird sichergestellt, daß kein Ölschaum angesaugt wird und daß das angesaugte reine Öl infolge der Staudruckkräfte und der Schwerkräfte durch die Lagerelemente hindurchfließt.

Durch die Verwendung eines rotierenden Ölbehälters ist es möglich, daß die rotierenden Lagerelemente je nach Bauart entweder direkt auf der Welle oder auf einer dünnwandigen Wellenschutzhülse montiert werden. Damit können die im Durchmesser kleinstmöglichen Lagerelemente Verwendung finden, welche sich an dem die Welle umgebenden Lagerträger abstützen. Entsprechend der jeweiligen Betriebsverhältnisse kann ein entsprechend groß dimensionierter Ölbehälter flüssigkeitsdicht auf der Welle befestigt werden. Die Anordnung der Lagerelemente innerhalb des Ölbehälters stellt sicher, daß bereits beim Beginn der Drehbewegung eine Ölschmierung gewährleistet ist.

Eine andere Ausgestaltung der Erfindung sieht vor, daß im Stillstand der Ölspiegel innerhalb des Ölbehälters oberhalb der untersten Lagerelemente verläuft. Damit wird zum einen im Anfahrbetrieb eine sichere Schmierung der am stärksten belasteten Lager bewirkt und zum anderen die Reibungsverluste innerhalb der Fördervorrichtung minimiert, da während des Betriebes die Lagerelemente, beispielsweise eine Spurscheibe, nicht ständig innerhalb eines Ölbades rotieren.

Ausführungsbeispiele der Erfindung sind in den Zeichnungen dargestellt und werden im folgenden näher beschrieben. Es zeigen die

Fig. 1 eine Lagerung mittels Wälzlager, die

Fig. 2 eine Axiallagerung mit einem Axialkräfte aufnehmenden Ölbehälter für wechselnd auftretende Kraftrichtung und die

Fig. 3 eine Axiallagerung mit einem entlasteten Ölbehälter, wobei die Axialbelastung im Stillstand und während des Betriebs nach unten gerichtet ist.

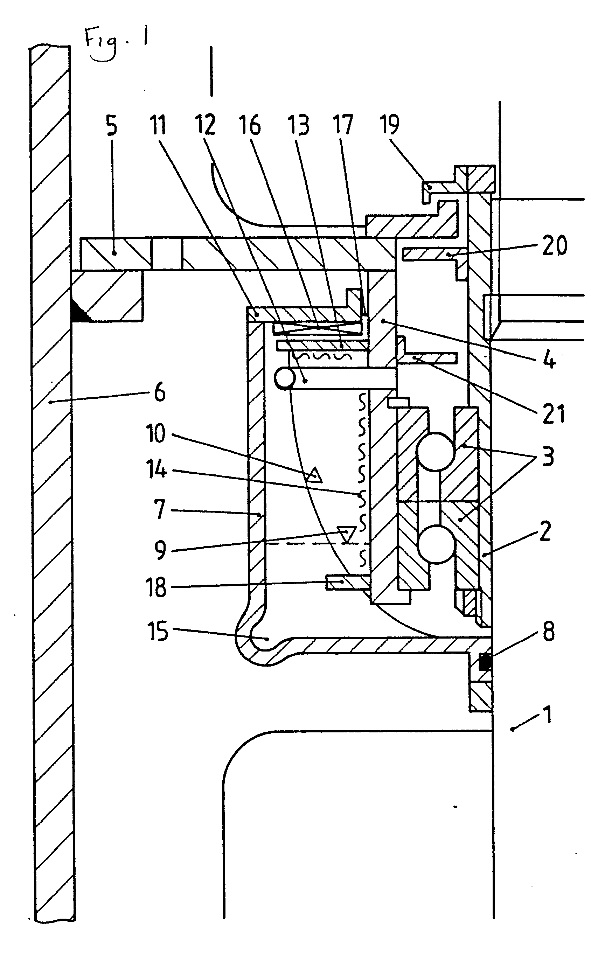

Die Fig. 1 zeigt eine Lagerung, bei der auf einer rotierenden Welle (1) eine dünnwandige Wellenschutzhülse (2) aufgeschoben ist. Die Wellenschutzhülse (2) trägt in diesem Ausführungsbeispiel Wälzlager (3), die hier als Schrägkugellager ausgebildet sind. Es können auch andere bekannte Lagerbauarten Verwendung finden. Die beiden dargestellten Wälzlager stützen sich mit ihren Lageraußenringen an einem stationären Lagerträger (4) ab, der mit einem Lagerträgerflansch (5) verbunden ist. Der Lagerträgerflansch (5) ist in diesem Ausführungsbeispiel an einer Motorlaterne (6) befestigt. Die Maschine des Ausführungsbeispiels stellt einen Elektromotor dar, der mit einem nicht dargestellten Kreiselpumpenaggregat verbunden ist, wobei die Motorlaterne (6) die Kraft- und Arbeitsmaschine miteinander verbindet. Die Dimensionierung des Lagerträgers (4) und des Lagerträgerflansches (5) erfolgt entsprechend den aufzunehmenden Radial- und Axialkräften.

Auf der Pumpenwelle (1) ist weiterhin ein Ölbehälter (7) befestigt, der mit der Wellendrehzahl umläuft und mit einem O-Ring (8) gegenüber der Welle abgedichtet ist. Der Ölbehälter (7) umhüllt die Lagerelemente (3) sowie den Lagerträger (4) und reicht bis an den Lagerträgerflansch (5) heran.

Die Ölmenge innerhalb des Ölbehälters (7) ist so bemessen, daß bei stillstehender Maschine die Wälzkörper des unteren, hier Axialkräfte aufnehmenden Lagerelementes (3) in den Ölspiegel (9) eintauchen. Dadurch ist sichergestellt, daß eine Stillstandsschmierung für das die Hauptkräfte übertragenden Lagerelementes gewährleistet ist. Da bei rotierender Welle der Ölbehälter ebenfalls mitrotiert, bildet sich innerhalb des Ölbehälters aufgrund der Zentrifugalkräfte ein parabolisch geformter Ölspiegel (10). Dieser steigt bereits bei geringer Drehzahl bis an den Deckel (11) des Ölbehälters (7) hinaus.

Oberhalb der Lagerelemente (3) sind im Lagerträger (4) ein oder mehrere an sich bekannte Stauelemente (12) angeordnet, die entgegen der Drehrichtung mit ihren Stauöffnungen in den rotierenden parabolisch ausgebildeten Ölspiegel (10) eintauchen. Für die jenigen Anwendungsfälle, bei denen mit einer Drehrichtungsumkehrung zu rechnen ist, finden entsprechend anders angeordnete zusätzliche Stauelemente (12) Verwendung.

Infolge des oder der Stauelemente (12) wird aus dem mit dem Ölbehälter (7) rotierenden Öl eine entsprechend notwendig große Ölmenge oberhalb der Lagerelemente (3) abgeschöpft und in den oberhalb der Lagerelemente (3) befindlichen Raum zwischen der Wellenschutzhülse (2) und dem Lagerträger (4) gefördert. Aufgrund der Staudruckkräfte und Schwerkrafteinwirkung fließt das Öl durch die Lagerelemente (3) hindurch und schmiert und kühlt dieselben. Aufgrund der selbständig wirkenden Ölzirkulation wird die Lagerverlustwärme an den Ölbehälter abgegeben und bedingt durch die rotierende Wandung mit hohem Wärmeübergangskoeffizienten an die Umgebungsluft abgeführt. Eine zwischen den Stauelementen (12) und dem Deckel (11) am Lagerträger (4) angebrachte stationäre Scheibe (13) ragt mit ihrem Außendurchmesser in den oberen Teil des parabolisch ausgebildeten Ölspiegels hinein. Dies führt dazu, daß die durch die Zentrifugalkraft des rotierenden Öles bedingte Ölförderhöhe an der Scheibe (13) einen Ölstrom (14) abzweigt, welcher an der Außenseite des Lagerträgers (4) herunterrinnt. Damit ist der Lagerträger (4) zusätzlich von außen permanent mit einem Ölfilm überzogen, der die von den Lagerelementen (3) erzeugte Wärme aufnimmt und abführt. Zur Absonderung von im Öl eventuell befindlichen Feststoffteilchen ist der Ölbehälter (7) im unteren Bereich mit einer radialen Erweiterung (15) versehen, in der sich aufgrund der Zentrifugalkräfte die schweren Bestandteile ablagern.

Der Deckel (11) des Ölbehälters (7) weist auf der nach innen gekehrten Seite radial verlaufende Rippen (16) auf, die der Scheibe (13) genau gegenüberliegen und zwischen dieser einen engen Spalt bestehen lassen. Aufgrund der Rotation des Deckels (11) erzeugen die Rippen (16) eine Pumpwirkung, die verhindert, daß ein eventueller Ölüberdruck am Deckel (11) entlangfließen und durch den Spalt (17) zwischen Deckel (11) und Lagerträger (4) entweichen könnte. Infolge der Rippen (16) entsteht also eine Pumpwirkung, die zu einem sperrenden Ölring führt, wobei die Förderhöhe der Rippen (16) größer als die durch die Zentrifugalkräfte bedingte Förderhöhe des Ölinhaltes ist. Im Gegensatz zu der hier benützten berührungsfreien Dichtung können auch bekannte berührende Dichtelemente, wie Gleitringdichtungen oder Radialwellendichtringe, Verwendung finden. Die durch die Zentrifugalkräfte bewirkte Förderhöhe des parabolisch geformten Ölspiegels (10) kann durch Einbauten (18) beeinflußt werden. Hierbei sind glatte oder verrippte Scheiben denkbar, mit denen die Förderhöhe minimiert werden kann.

Die Abdichtung zwischen dem Lagerträgerflansch (5) und der hindurchgeführten Welle (1) bzw. Wellenschutzhülse (2) erfolgt ebenfalls mit berührungslosen Dichtungen. Diese werden durch Scheiben (19, 20) gebildet, die hier auf der Wellenschutzhülse (2) angeordnet sind und sich in radialer Richtung erstrecken. Dabei weist die Scheibe (20) einen größeren Durchmesser als die Scheibe (19) auf, um somit zu verhindern, daß die Pumpwirkung der Scheibe (19) einen Ölnebel nach außen befördern würde. Bedingt durch den größeren Durchmesser der innen angeordneten Scheibe (20) wird somit eine zuverlässige Sperrwirkung erzeugt. Zum Schutz gegen Spritzöleinwirkungen kann zusätzlich auf der Innenseite des Lagerträgers (4) eine stationäre Scheibe (21) angeordnet werden, die oberhalb des Austrittes der Stauelemente (12) angebracht ist.

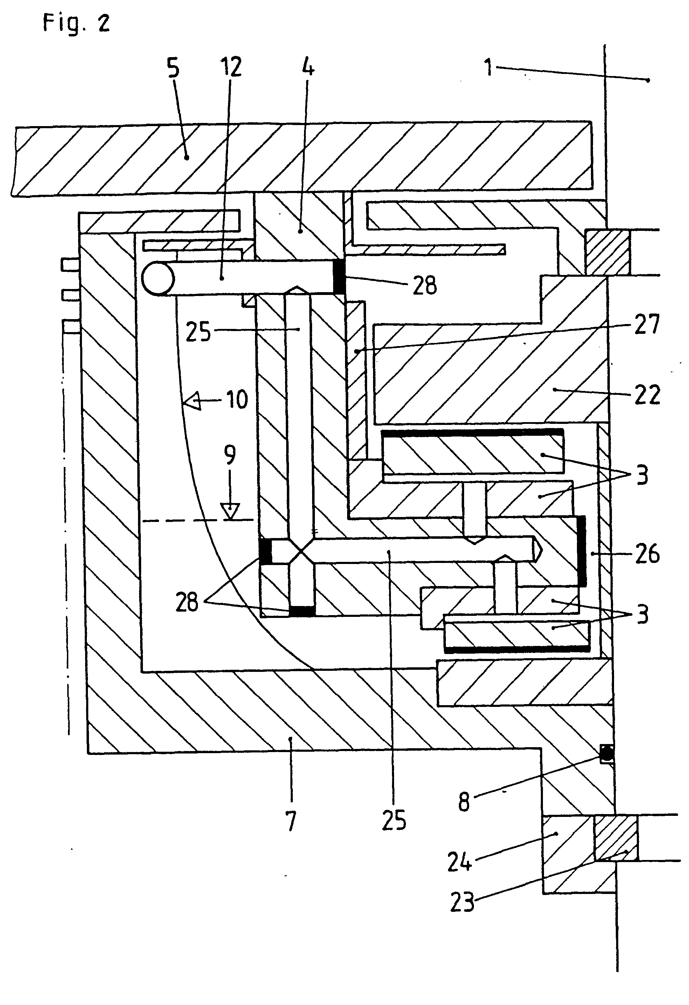

Die Fig. 2 zeigt eine Ausführungsform, bei der ein im Querschnitt L-förmig ausgebildeter Lagerträger (4) Verwendung findet und an dem Lagerträgerflansch (5) befestigt ist. An dem in waagerechter Richtung verlaufenden Teil des Lagerträgers (4) sind beidseitig als Axialgleitlager ausgebildete Lagerelemente (3) angebracht. Eine auf der Welle (1) direkt angebrachte und mit der Welle rotierende Spurscheibe (22) überträgt die Axialkräfte der Welle (1) mittels der Lagerelemente (3) auf den Lagerträger (4). Im Gegensatz zur Fig. 1 ist der Ölbehälter (7) in diesem Ausführungsbeispiel kräfteaufnehmend ausgebildet und somit stärker dimensioniert. Die Axialschübe der Welle werden infolge kräfteübertragender Elemente (23, 24) in den Ölbehälter (7) eingeleitet, in dessen Bodenfläche eine Aufnahme für die Lagerelemente (3) angeordnet ist. Der Lagerträger (4) ist hier mit innenliegenden Ölkanälen (25) versehen, mit denen das durch die Stauelemente (12) aufgenommene Öl den Lagerelementen (3) zugeführt wird. Das hier verwendete Lager besteht aus rotierenden Ringen, die sich an einzelnen Axiallagersegmenten abstützen. Die Aufnahme der Radialkräfte erfolgt hier durch ein zwischen den Lagerelementen (3) angeordnetes separates Radiallager (26). Um zu verhindern, daß der das obere Lagerelement (3) verlassende Ölstrom infolge der Zentrifugalkräfte nach oben steigt, ist zwischen dem Lagerträger (4) und der Spurscheibe (22) eine Fördergewindesperre (27) vorgesehen. Die Abdichtung zwischen der Welle (1) und dem Lagerträgerflansch (5) sowie zwischen dem Ölbehälter (7) und dem Lagerträger (4) erfolgt entsprechend der Fig. 1.

Die Ölkanäle innerhalb des Lagerträgers (4) sind einfache, von außen angebrachte Bohrungen, die anschließend durch Einsätze (28) verschlossen werden.

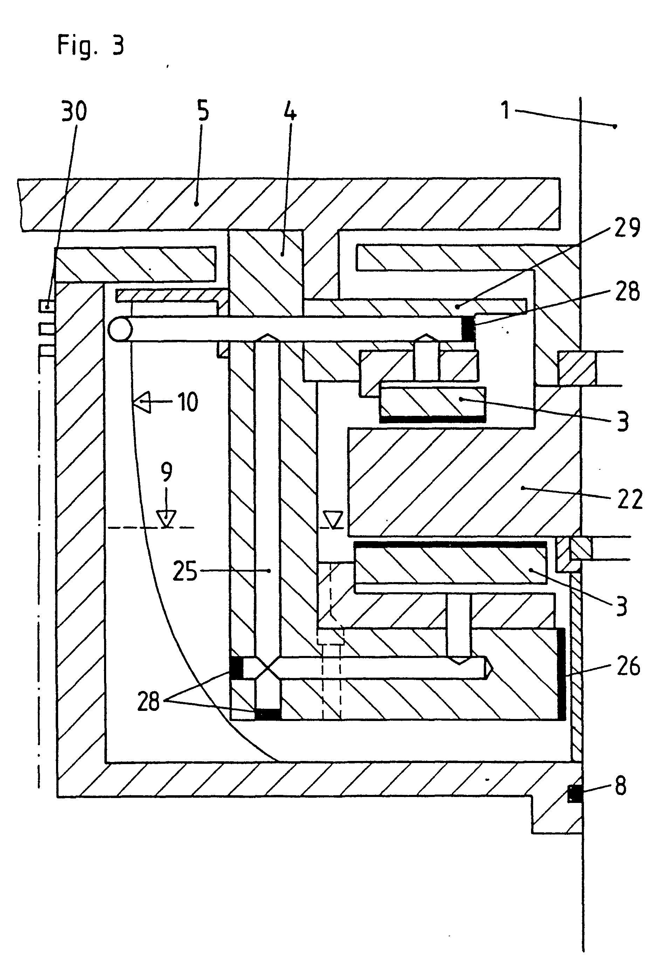

In der Fig. 3 findet eine Ausführungsform Verwendung, bei der der Ölbehälter (7) keine Lagerkräfte aufzunehmen hat. Eine auf der Welle (1) montierte Spurscheibe (22) überträgt die Kräfte ähnlich wie bei der Fig. 2 auf den Lagerträger (4). Im Unterschied zur Fig. 2 ist oberhalb der Spurscheibe (22) am Lagerträger (4) ein zusätzlicher Ringflansch (29) angebracht, der eventuelle Axialschübe aufnimmt und auf den Lagerträger (4) sowie den mit einer Anlagefläche versehenen Lagerträgerflansch (5) weiterleitet. Die Ölzufuhr erfolgt entsprechend der Ausführungsform gemäß Fig. 2. Den beiden Ausführungsformen der Fig. 2 und 3 ist gemeinsam, daß innerhalb des Ölbehälters beim Stillstand der Maschine ein Flüssigkeitsstand (9) vorherrscht, unterhalb dessen das untere, die Massenkräfte aufnehmende Lagerelement (3) angeordnet ist. Zur besseren Wärmeabfuhr ist die Außenfläche des Ölbehälters (7) mit Kühlrippen (30) versehen.

**Patentansprüche**

1. Lagerung für Maschinen mit vertikaler Welle (1), wobei ein ölgefülltes Gehäuse als rotierender Ölbehälter (7) ausgebildet und dessen Außenseite mit Kühlelementen versehen ist, an einem stationären Lagerträger (4) ein oder mehrere Stauelemente (12) angebracht sind, deren Aufnahmeöffnungen in der Nähe der Wandfläche des Ölbehälters angeordnet sind und zwischen dem rotierenden Ölbehälter (7) und dem Lagerträger (4) Dichtungen angeordnet sind, dadurch gekennzeichnet, daß die Aufnahmeöffnungen der Stauelemente (12) oberhalb der Lagerelemente (3, 26) angeordnet sind, daß die mit der Welle (1) verbundenen Lagerelemente (3, 26) innerhalb eines mit Wellendrehzahl rotierenden Ölbehälters (7) angeordnet sind, und daß zwischen den Welle (1) und einem den Lagerträger (4) haltenden Lagerträgerflansch (5) Dichtungen angeordnet sind.

2. Lagerung nach Anspruch 1, dadurch gekennzeichnet, daß im Stillstand der Ölspiegel innerhalb des Ölbehälters (7) und oberhalb der untersten Lagerelemente (3) verläuft.

**Revendications**

1. Logement de palier pour machines à arbre (1) vertical dans lequel un boîtier rempli d'huile a la forme d'un réservoir à huile rotatif (7) dont la paroi extérieure est munie d'éléments de refroidissement, dans lequel sont placés à un support de palier (4) fixe un ou plusieurs éléments de retenue (12) dont les ouvertures de positionnement sont situées à proximité de la surface de la paroi du réservoir à huile et dans lequel sont situés des joints entre le réservoir à huile (7) rotatif et le support de palier (4) caractérisé en ce que les ouvertures de positionnement des éléments de palier (3, 26) et en ce que les éléments de palier (3, 26) liés à l'arbre (1) sont situés à l'intérieur d'un réservoir à huile tournant à la vitesse de l'arbre et que des joints sont placés entre l'arbre (1) et une bride (5) de support de palier maintenant le support de palier (4).

2. Logement de palier selon la revendication 1 caractérisé en ce que, à l'arrêt, le niveau d'huile est situé à l'intérieur du réservoir d'huile (7) et au-dessus des éléments de palier (3) les plus inférieurs.

**Claims**

1. A bearing arrangement for machinery with a vertical shaft (1), in the case of which a housing filled with oil is designed in the form of a rotating oil container (7) and its outer side is provided with cooling elements, on a stationary bearing carrier (4) one or more dam elements (12) are attached, whose receiving openings are arranged in the vicinity of the wall surface of the oil container and seals are arranged between the rotating oil container (7) and the bearing carrier (4), characterized in that the receiving openings of the dam elements (12) are arranged above the bearing elements (3 and 26) and in that the bearing elements (3 and 26) connected with the shaft (1) are arranged within an oil container (7) rotating at the same speed as the shaft and in that seals are arranged between the shaft (1) and a bearing support flange (5) holding the bearing carrier (4).

2. The bearing arrangement as claimed in claim 1, characterized in that in the nonoperating state the oil level is within the oil container (7) and above the lowermost bearing elements (3).

Fig. 1

Fig. 2

Fig. 3